# EUROPÄISCHE PATENTSCHRIFT

(11) **EP 2 185 326 B1**
(45) Veröffentlichungstag und Bekanntmachung des Hinweises auf die Patenterteilung: **13.07.2011**
(21) Anmeldenummer: 08782842.2
(22) Anmeldetag: 04.09.2008
(51) Int. Cl.: B25G 3/38, B26B 19/06

(54) **SCHNEIDVORRICHTUNG MIT WENIGSTENS EINEM BEWEGLICHEN VON EINEM MOTOR ANTREIBBAREN SCHNEIDKOPF**
CUTTING APPARATUS WITH AT LEAST ONE MOVEABLE CUTTING HEAD WHICH CAN BE DRIVEN BY A MOTOR
DISPOSITIF DE COUPE COMPRENANT AU MOINS UNE TÊTE DE COUPE MOBILE QUI PEUT ÊTRE ENTRAÎNÉE PAR UN MOTEUR

(30) Priorität: 06.09.2007 AT 13872007
(43) Veröffentlichungstag der Anmeldung: 19.05.2010
(73) Patentinhaber: Payer International Technologies GmbH, 8151 St. Bartholomä (AT)
(72) Erfinder: HENDLER, René, 8020 Graz (AT)
(74) Vertreter: Haffner und Keschmann Patentanwälte OG
(86) Internationale Anmeldenummer: PCT/AT2008/000314
(87) Internationale Veröffentlichungsnummer: WO 2009/029970

(56) Entgegenhaltungen:
- EP-A- 0 707 926
- DE-U1-202005 021 083
- US-A1- 2005 039 286

## Beschreibung

Die Erfindung bezieht sich auf eine Schneidvorrichtung mit wenigstens einem beweglichen von einem Motor antreibbaren Schneidkopf, dessen Orientierung relativ zu einem Griffteil um wenigstens eine Achse schwenkbar ist.

Schneidvorrichtungen der eingangs genannten Art sind beispielsweise der DE 20 2005 021 083 U1 zu entnehmen. Bei dieser bekannten Schneideinrichtung wird eine Haarschneidevorrichtung geschaffen, bei welcher der Schneidkopf relativ zum Griffteil um eine Achse, welche die Schneidmesser durchsetzt, schwenkbar ist. Zu diesem Zwecke ist der Kopfteil im Griffteil rotierbar gelagert und kann in der jeweiligen Drehlage arretiert werden. Für die in diesem Fall bevorzugte Verwendung als Haarschneidevorrichtung wird dadurch die Bedienbarkeit der Schneidevorrichtung wesentlich erleichtert, da ungeübte nicht professionelle Benutzer auf diese Weise unterschiedliche Positionen leichter erreichen. Dies gilt umso mehr, als der Benutzer eine derartige Haarschneidevorrichtung üblicherweise vor einem Spiegel verwendet, wodurch die entsprechenden Bewegungen in der Regel für ungeübte Benutzer noch schwerer durchzuführen sind, da ja jeweils seitenverkehrte Bewegungen ausgeführt werden müssen. Schneideinrichtungen der eingangs genannten Art können aber nicht nur als Haarschneideeinrichtungen zum Einsatz gelangen. Vielmehr ist es möglich, bei entsprechender Ausbildung der Messer im Wesentlichen analog ausgebildete Schneideinrichtungen auch als Gras- oder Heckenscheren einzusetzen. In diesen Fällen kann eine Schwenkbarkeit um die aus der DE 20 2005 021 083 U1 bekannten die Schneiden durchsetzende Achse zwar einer Reihe von Bedienungsvorteilen bringen, eine erweiterte Anpassbarkeit an komplexe Formen, die das Façonnieren des zu schneidenden Gutes erleichtern soll, kann aber mit einer einfachen Drehung in der Ebene das Schneiden nicht ohne Weiteres gewährleisten.

Eine Schneidvorrichtung gemäß dem Oberbegriff von Anspruch 1 ist auch aus der EP 0 707 926 A1 bekannt.

Die Erfindung zielt nun darauf ab, eine Schneidvorrichtung der eingangs genannten Art dahingehend weiterzubilden, dass Hand- und Schneidkopf mit der Achse in beliebiger Weise verstellt werden können, um auf diese Weise immer die günstigste Betätigungsposition bzw. die günstigste Orientierung des Griffteiles für ein zügiges und genaues Arbeiten zu ermöglichen. Zur Lösung dieser Aufgabe besteht die erfindungsgemäße Ausbildung ausgehend von der eingangs genannten Schneidvorrichtung im Wesentlichen darin, dass der Schneidkopf oder der Griffteil eine Pfanne aufweist, in welche eine aufweitbare und feststellbare Kugel eingreift. Durch die Verbindung des Schneidkopes mit dem Griffteil unter Verwendung eines Kugelkopfschwenkkopfes lassen sich beliebige Orientierungen in weiten Grenzen frei wählen und eine einfache Festlegung der jeweils gewählten Orientierung in den einzelnen Positionen erzielen.

Kugelköpfe, mit welchen zwei mit einander zu verbindende Bauteile in beliebigen Positionen relativ zueinander festgelegt werden können, sind in den unterschiedlichen Ausbildungen bekannt. Üblicherweise werden Foto- oder Kamerastative mit Kugelköpfen ausgestattet, wobei derartige Kugelköpfe durch exzentrisch wirkende Anpressglieder in ihrer Position gehalten werden. Derartige Ausbildungen eignen sich aber nicht für eine gefahrlose Durchführung elektrischer Kabel, welche die Energieversorgung bzw. entsprechende Betätigungsschalter mit einem Antriebsmotor verbinden. Bevorzugt ist daher die Wahl einer aufweitbaren Kugel, für welche unterschiedliche Ausbildungen denkbar sind. Eine besonders bevorzugte Weiterbildung der erfindungsgemäßen Schneidvorrichtung besteht in diesem Zusammenhang darin, dass die aufweitbare Kugel von um eine die Kugel durchsetzende Achse angeordneten Kugelspalten gebildet ist und dass ein Aufweitedorn in Richtung der genannten Achse verschiebbar geführt ist. Die einzelnen Kugelspalten können selbst in geeigneter Weise miteinander verbunden sein, wobei vorzugsweise die Kugelspalten über ein federndes Element miteinander verbunden sind und/oder von einem elastischen Band in Umfangsrichtung umgriffen oder durchsetzt sind. Eine derartige Ausbildung erlaubt die Ausbildung eines zentralen Hohlraumes, in welcher selbst wieder ein Aufweitedorn eingeführt werden kann, der dann die geschützte Durchführung elektrischer Kabel erlaubt.

Mit Vorteil ist die Ausbildung jeweils so getroffen, dass der Griffteil oder der Schneidkopf einen verriegelbaren, schwenkbaren Spannhebel trägt und dass ein Hebelarm des Spannhebels gelenkig mit dem Aufweitedorn verbunden ist, wobei mit einer derartigen Ausbildung eine relativ große Spannkraft auf den Aufweitedorn übertragen werden kann und damit eine sichere Arretierung ermöglicht wird. Eine besonders hohe Spannkraftübertragung resultiert aus der üblicherweise vergleichsweise langen Ausbildung des Griffteiles, welcher eine entsprechende lange Ausbildung des schwenkbaren Hebels ermöglicht.

Bevorzugt ist die Ausbildung so getroffen, dass der Aufweitedorn über wenigstens einen Teil seiner Länge eine kegel- oder kegelstumpfförmige Außenkontur aufweist und einen zentralen durchgehenden, axial verlaufenden Hohlraum aufweist, wodurch eine gegen Beschädigungen geschützte Durchführung elektrischer Kabel möglich ist. Derartige elektrische Verbindungskabel sind insbesondere dann von Vorteil, wenn der Griffteil einen elektrischen Schalter für die Betätigung des Motors aufweist und/oder der Griffteil einen Energiespeicher, insbesondere aufladbare Batterien, trägt.

Um auch bei hohen zwischen Spannhebel und Aufweitedorn zu übertragenden Kräften hier eine Verschleißfestigkeit zu gewährleisten, ist die Ausbildung mit Vorteil so betroffen, dass der Spannhebel und der Aufweitedorn über Langlöcher und Bolzen gelenkig miteinander verbunden sind, wobei vorzugsweise das Langloch des Aufweitedornes zur Achse des Dornes parallel und außerhalb des axialen Hohlraums des Aufweitedornes angeordnet ist, um auf diese Weise eine Beschädigung der durch den Hohlraum durchgeführten Kabel bzw. elektrischen Leiter zu verhindern.

Wie bereits eingangs erwähnt, kann die erfindungsgemäße Schneidvorrichtung bevorzugt als Gras- oder Heckenschere oder aber auch als Haarschneidegerät ausgebildet sein.

Gemäß einer bevorzugten Weiterbildung ist zwischen dem Griffteil und dem Schneidkopf ein Federelement angeordnet, welches eine federnde Verschwenkung des Schneidkopfs relativ zum Griffteil erlaubt. Der Schneidkopf ist somit federnd gelagert, sodass dann, wenn die Schwenkbewegung des Schneidkopfs relativ zum Griffteil freigegeben ist, sich der Schneidkopf den Gegebenheiten des Körpers anpasst und immer der Körperkontur folgen kann. Das Federelement kann hierbei derart angeordnet sein, dass sich der Schneidkopf immer selbsttätig in die Mittelstellung zurückstellt. Dies ist insbesondere dann der Fall, wenn, wie es einer bevorzugten Weiterbildung entspricht, das Federelement sowohl am Griffteil als auch am Schneidkopf festgelegt und insbesondere niedergehalten ist.

Das Federelement kann hierbei von einer die Kugel in Umfangsrichtung umgreifenden Spiral- oder Schraubenfeder gebildet sein. Dadurch wird bei einer Verschwenkung des Schneidkopfs von dem Federelement eine Zug- bzw. Druckkraft ausgeübt, die den Schneidkopf in die ursprüngliche Stellung gerade stellt. Damit der Schneidkopf trotz der Festlegung des Federelements am Griffteil und am Schneidkopf um seine eigene Achse drehbar bleibt, ist gemäß einer bevorzugten Weiterbildung vorgesehen, dass das Federelement in Umfangsrichtung der Kugel drehbar am Griffteil und am Schneidkopf festgelegt ist.

Weiters kann vorgesehen sein, dass die Pfanne mit einem elastischen Material ausgelegt ist und die Kugel an ihrer Oberfläche eine Vielzahl ebener Flächen aufweist. Dadurch kann die Haltekraft der Kugel in der Pfanne zusätzlich erhöht werden. Vor allem dann, wenn die Pfanne mit EPDM, SEBS, TPE oder einem anderen elastischem Kunststoff ausgelegt ist. Wenn die Kugel gegen die Pfanne gedrückt wird, wird das elastische Material zusammengedrückt und bildet mit den ebenen Flächen der Kugel einen Formschluss.

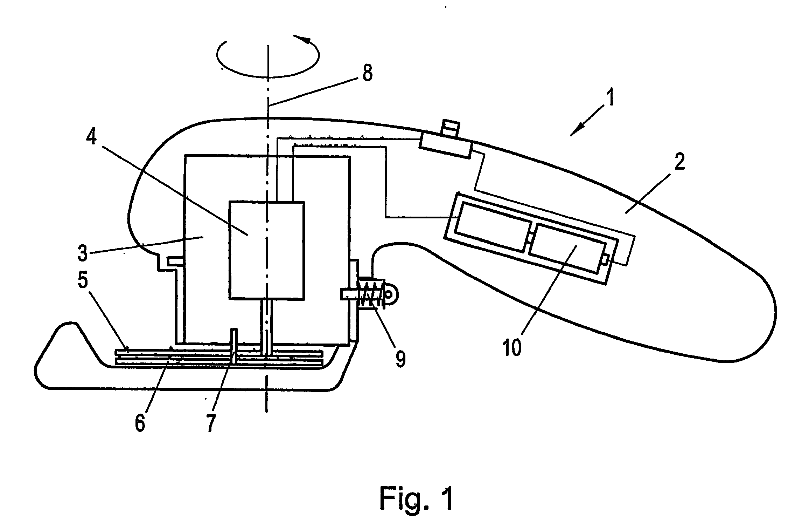

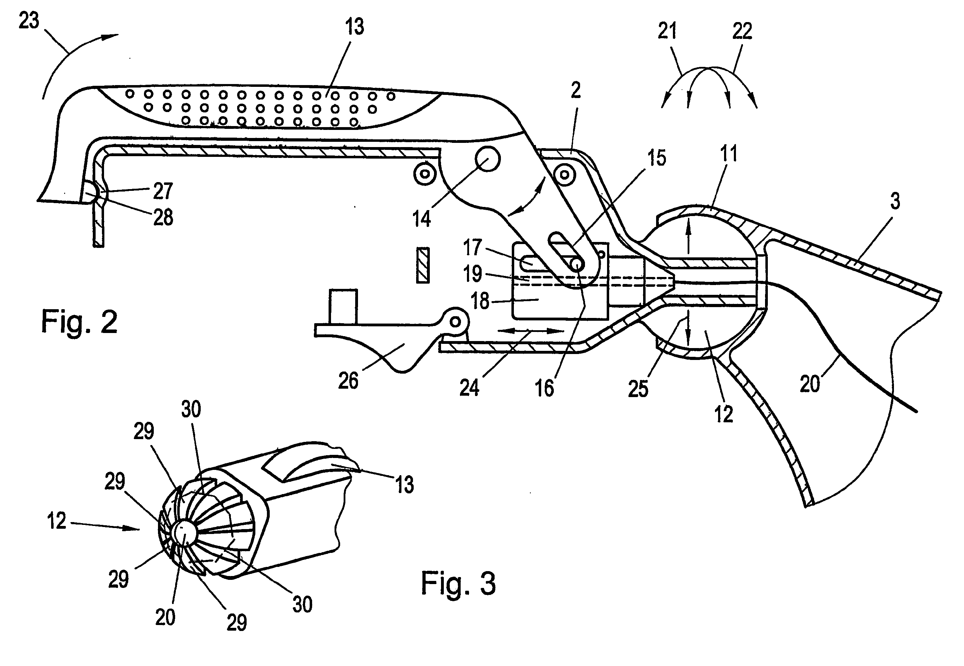

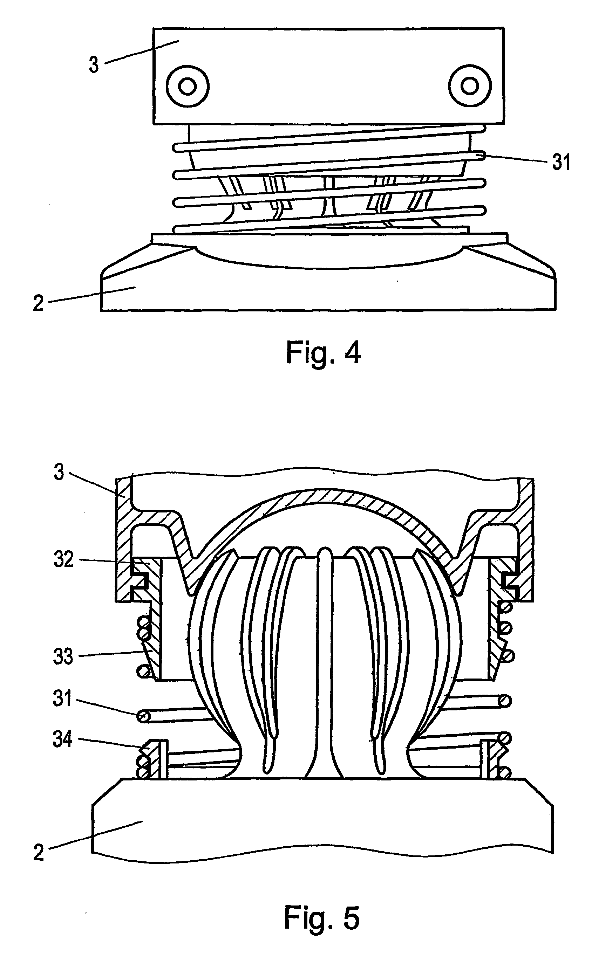

Die Erfindung wird nachfolgend anhand eines in der Zeichnung schematisch dargestellten Ausführungsbeispieles näher erläutert. In dieser zeigen Fig. 1 eine Schneidevorrichtung nach dem Stand der Technik, Fig. 2 eine Detailansicht der Verbindung zwischen Griffteil und Schneidkopf mit der erfindungsgemäßen mehrachsigen Schwenkbarkeit, Fig. 3 eine Detailansicht des aus Kugelspalten bzw. Kugelsegmenten bestehenden Kugelkopfes, Fig. 4 eine Detailansicht der federnden Lagerung des Schneidkopfs am Griffteil und Fig. 5 eine Darstellung gemäß Fig. 4, teilweise im Schnitt.

In Fig. 1 ist ein Schneidegerät 1 ersichtlich, welches einen Griffteil 2 aufweist. Der Schneidkopf ist mit 3 bezeichnet und enthält in seinem Inneren einen Antriebsmotor 4, welcher mit einem Schneidmesser 5 zusammenwirkt. Der Antriebsmotor greift hierzu exzentrisch in ein Langloch des Schneidmessers 5 ein, so dass dieses relativ zu einem fest stehenden Schneidmesser 6 um die Schwenkachse 7 jeweils verschwenkt werden kann und das zu schneidende Gut schneidet.

Der Schneidkopf 3 ist um eine die Messer 5 und 6 durchsetzende Achse 8 schwenkbar, wobei ein federndes Verriegelungsglied 9 vorgesehen ist, welches den Schneidkopf 3 in der jeweiligen Schwenklage arretiert. Auf diese Weise kann der Schneidkopf 3 um vorbestimmte Winkelstellungen um die Achse 8 verschwenkt und wiederum festgelegt werden, wobei die vorgewählten Winkelstellungen für den Eingriff des federnden Verriegelungsgliedes 9 am Umfang des Schneidkopfes 3 beispielsweise durch Nuten ausgebildet sind. Mit 10 sind im Griffteil Batterien als Energieversorgungseinheit schematisch angebracht.

Bei der Darstellung nach Fig. 2 ist nun mit 3 wiederum schematisch der Schneidkopf und mit 2 das Griffteil bezeichnet. Der Schneidkopf 3 endet in einer Pfanne 11, in welche ein aufweitbarer Kugelkopf 12 eingreift. Am Griffteil 2 ist weiters ein Spannhebel 13 um eine Achse 14 schwenkbar festgelegt, welche über ein Langloch 15 und einen als Achse wirksamen Bolzen 16 in ein Langloch 17 eines Aufweitedornes 18 eingreift. Der Aufweitedorn 18 weist einen zentralen Hohlraum 19 für die Durchführung eines schematisch mit 20 angedeuteten Kabels auf, wobei im Griffteil 2 wiederum die in Fig. 1 ersichtliche Batterie oder ein Akkumulator untergebracht sein kann. Der Schneidkopf 3 kann im Sinne der Doppelpfeile 21 und 22 beliebig verschwenkt werden, wobei die Schwenkbarkeit lediglich durch die Begrenzungen der Pfanne 11 limitiert sind. Zur Festlegung des Schneidkopfes 3 relativ zum Griffteil 2 genügt es nun, den Spannhebel 13 entgegen der Richtung des Pfeils 23 abwärts zu schwenken, womit der Aufweitedorn 18 im Sinne des Doppelpfeils 24 in den axialen Hohlraum der Kugel eintaucht und die Kugelsegmente bzw. Kugelspalten aufgrund der konischen Außenkontur in Richtung der Pfeile 25 auswärts bewegt. Durch die Hebelübersetzung des Spannhebels 13 können hohe Spannkräfte auf den Dorn 18 ausgeübt werden und es kann somit ein sicherer Halt des Schneidkopfes 3 in der jeweils gewählten Dreh- oder Schwenklage relativ zum Griffteil gewährleistet werden.

Mit 26 ist noch schematisch ein möglicher elektronischer Schalter dargestellt, welcher wiederum am Griffteil 2 festgelegt sein kann. 27 bezeichnet eine Kerbe am Griffteil 2, in welcher ein entsprechender Vorsprung 28 des Spannhebels 13 bei einer Verriegelung durch Verschwenken entgegen der Richtung des Pfeils 23 verrastbar ist.

In Fig. 3 sind die Kugelspalten bzw. Kugelsegmente des Kugelkopfes 12 mit 29 bezeichnet und werden von Federgliedern 30 zusammengehalten. Die Kugelspalten bzw. Kugelsegmente 29 können zusätzlich außen und die Pfanne 11 innen mit einem Belag zur Erhöhung der Reibung beschichtet sein.

In Fig. 4 ist eine bevorzugte Weiterbildung der schwenkbaren Lagerung des Schneidkopfs relativ zum Griffteil dargestellt, wobei zwischen dem Schneidkopf 3 und dem Griffteil 2 eine Schraubenfeder 31 angeordnet ist. Wie sich insbesondere aus der Darstellung gemäß Fig. 5 ergibt, ist zur Festlegung der Schraubenfeder 31 am Schneidkopf ein in Umfangsrichtung beweglich geführter Fixierring 32 vorgesehen, der einen die Schraubenfeder 31 übergreifenden vorspringenden Bereich 33 zum Niederhalten der Schraubenfeder 31 am Schneidkopf 3 aufweist. Die entsprechende Fixierung der Schraubenfeder 31 am Griffteil 2 erfolgt mit Hilfe eines mit dem Griffteil 2 verbundenen Fixierringes 34, der wiederum einen vorspringenden Bereich zum Niederhalten der Schraubenfeder 31 aufweist. Die Schraubenfeder 31 erlaubt eine federnde Verschwenkung des Schneidkopfs 3 relativ zum Griffteil 2, wobei aufgrund der schneidkopf- und griffteilseitigen Festlegung der Schraubenfeder 31 eine selbsttätige Rückstellung des schwenkbaren Schneidkopfs 3 sichergestellt ist. Durch die federnde Verschwenkung des Schneidkopfs 3 relativ zum Griffteil 2 wird eine Konturanpassung beim Entlangführen des Schneidkopfs 3 an einer Körperkontur gewährleistet.

## Patentansprüche

1. Schneidvorrichtung mit wenigstens einem beweglichen von einem Motor antreibbaren Schneidkopf, dessen Orientierung relativ zu einem Griffteil um wenigstens eine Achse schwenkbar ist, **dadurch gekennzeichnet, dass** der Schneidkopf (3) oder der Griffteil (2) eine Pfanne (11) aufweist, in welche eine aufweitbare und feststellbare Kugel (12) eingreift.

2. Schneidvorrichtung nach Anspruch 1, **gekennzeichnet**, dass die aufweitbare Kugel (12) von um eine die Kugel (12) durchsetzende Achse angeordneten Kugelspalten (29) gebildet ist und dass ein Aufweitedorn (18) in Richtung der genannten Achse verschiebbar geführt ist.

3. Schneidvorrichtung nach den Ansprüchen 1 und 2, **dadurch gekennzeichnet, dass** der Griffteil (2) oder der Schneidkopf (3) einen verriegelbaren schwenkbaren Spannhebel (13) trägt und dass ein Hebelarm des Spannhebels (13) gelenkig mit dem Aufweitedorn (18) verbunden ist.

4. Schneidvorrichtung nach einem der Ansprüche 1 bis 3, **dadurch gekennzeichnet, dass** der Aufweitedorn (18) über wenigstens einen Teil seiner Länge eine kegel- oder kegelstumpfförmige Außenkontur aufweist und einen zentralen durchgehenden, axial verlaufenden Hohlraum (19) aufweist.

5. Schneidvorrichtung nach einem der Ansprüche 1 bis 4, **dadurch gekennzeichnet, dass** der Griffteil (2) einen elektrischen Schalter (26) für die Betätigung des Motors (4) aufweist.

6. Schneidvorrichtung nach einem der Ansprüche 1 bis 5, **dadurch gekennzeichnet, dass** der Griffteil (2) einen Energiespeicher, insbesondere aufladbare Batterien (10), trägt.

7. Schneidvorrichtung nach einem der Ansprüche 1 bis 6, **dadurch gekennzeichnet, dass** der Spannhebel (13) und der Aufweitedorn (18) über Langlöcher (15, 17) und Bolzen (16) gelenkig miteinander verbunden sind.

8. Schneidvorrichtung nach einem der Ansprüche 1 bis 7, **dadurch gekennzeichnet, dass** das Langloch (17) des Aufweitedornes (18) zur Achse des Dornes (18) parallel und außerhalb des axialen Hohlraums (19) des Aufweitedornes (18) angeordnet ist.

9. Schneidvorrichtung nach einem der Ansprüche 2 bis 8, **dadurch gekennzeichnet, dass** die Kugelspalten (29) über ein federndes Element (30) miteinander verbunden sind und/oder von einem elastischen Band in Umfangsrichtung umgriffen oder durchsetzt sind.

10. Schneidvorrichtung nach einem der Ansprüche 1 bis 9, **dadurch gekennzeichnet, dass** die Schneidvorrichtung als Gras- oder Heckenschere oder als Haarschneidegerät ausgebildet ist.

11. Schneidvorrichtung nach einem der Ansprüche 1 bis 10, **dadurch gekennzeichnet, dass** zwischen dem Griffteil (2) und dem Schneidkopf (3) ein Federelement (31) angeordnet ist, welches eine federnde Verschwenkung des Schneidkopfs (3) relativ zum Griffteil (2) erlaubt.

12. Schneidvorrichtung nach einem der Ansprüche 1 bis 11, **dadurch gekennzeichnet, dass** das Federelement (31) von einer die Kugel (12) in Umfangsrichtung umgreifenden Schrauben- oder Spiralfeder gebildet ist.

13. Schneidvorrichtung nach einem der Ansprüche 1 bis 12, **dadurch gekennzeichnet, dass** das Federelement (31), insbesondere die Schraubenfeder, sowohl am Griffteil (2) als auch am Schneidkopf (3) festgelegt, insbesondere niedergehalten ist.

14. Schneidvorrichtung nach einem der Ansprüche 1 bis 13, **dadurch gekennzeichnet, dass** das Federelement (31) in Umfangsrichtung der Kugel (12) drehbar am Griffteil (2) und am Schneidkopf (3) festgelegt ist.

15. Schneidvorrichtung nach einem der Ansprüche 1 bis 14, **dadurch gekennzeichnet, dass** die Pfanne (11) mit einem elastischen Material ausgelegt ist und die Kugel (12) an ihrer Oberfläche eine Vielzahl ebener Flächen aufweist.

## Claims

1. A cutting apparatus including at least one movable cutting head that is drivable by a motor and whose orientation relative to a handle portion is pivotable about at least one axis, **characterized in that** the cutting head (3) or the handle portion (2) comprises a cup (11) into which an expandable and fixable ball (12) engages.

2. A cutting apparatus according to claim 1, **characterized in that** the expandable ball (12) is comprised of ball sections (29) arranged about an axis passing through the ball (12), and that an expanding mandrel (18) is displaceably guided in the direction of said axis.

3. A cutting apparatus according to claims 1 and 2, **characterized in that** the handle portion (2) or the cutting head (3) carries a lockable, pivotable tension lever (13), and that a lever arm of the tension lever (13) is articulately connected with the expanding mandrel (18).

4. A cutting apparatus according to any one of claims 1 to 3, **characterized in that** the expanding mandrel (18), over at least a portion of its length, has a conical or frustoconical outer contour and comprises a centrally throughgoing, axially extending cavity (19).

5. A cutting apparatus according to any one of claims 1 to 4, **characterized in that** the handle portion (2) comprises an electric switch (26) for actuating the motor (4).

6. A cutting apparatus according to any one of claims 1 to 5, **characterized in that** the handle portion (2) carries an energy storage means, in particular rechargeable batteries (10).

7. A cutting apparatus according to any one of claims 1 to 6, **characterized in that** the tension lever (13) and the expanding mandrel (18) are articulately connected via oblong holes (15, 17) and pins (16).

8. A cutting apparatus according to any one of claims 1 to 7, **characterized in that** the oblong hole (17) of the expanding mandrel (18) is arranged in parallel with the axis of the mandrel (18) and outside the axial cavity (19) of the expanding mandrel (18).

9. A cutting apparatus according to any one of claims 2 to 8, **characterized in that** the ball sections (29) are interconnected by a resilient element (30) and/or encompassed or penetrated by an elastic band in the circumferential direction.

10. A cutting apparatus according to any one of claims 1 to 9, **characterized in that** the cutting apparatus is configured as a grass or hedge trimmer or as a hair cutting device.

11. A cutting apparatus according to any one of claims 1 to 10, **characterized in that** a spring element (31) is arranged between the handle portion (2) and the cutting head (3), said spring element allowing for a resilient pivotal movement of the cutting head (3) relative to the handle portion (2).

12. A cutting apparatus according to any one of claims 1 to 11, **characterized in that** the spring element (31) is formed by a helical or spiral spring encompassing the ball (12) in the circumferential direction.

13. A cutting apparatus according to any one of claims 1 to 12, **characterized in that** the spring element (31), in particular the helical spring, is fixed to, particularly pressed down on, both the handle portion (2) and the cutting head (3).

14. A cutting apparatus according to any one of claims 1 to 13, **characterized in that** the spring element (31) is fixed to the handle portion (2) and the cutting head (3) so as to be rotatable in the circumferential direction of the ball (12).

15. A cutting apparatus according to any one of claims 1 to 14, **characterized in that** the cup (11) is lined with an elastic material and the ball (12) comprises a plurality of plane surfaces on its upper surface.

## Revendications

1. Dispositif de coupe comprenant au moins une tête de coupe mobile pouvant être entraînée par un moteur, dont l'orientation par rapport à une partie de préhension peut pivoter autour d'au moins un axe, **caractérisé en ce que** la tête de coupe (3) ou la partie de préhension (2) présente une douille (11) dans laquelle s'engage une sphère (12) expansible et immobilisable.

2. Dispositif de coupe selon la revendication 1, **caractérisé en ce que** la sphère expansible (12) est constituée de fentes sphériques (29) disposées autour d'un axe traversant la sphère (12) et **en ce qu'**un mandrin d'expansion (18) est guidé à coulissement dans la direction dudit axe.

3. Dispositif de coupe selon les revendications 1 et 2, **caractérisé en ce que** la partie de préhension (2) ou la tête de coupe (3) porte un levier de serrage (13) pivotant et verrouillable et **en ce qu'**un bras du levier de serrage (13) est relié de manière articulée au mandrin d'expansion (18).

4. Dispositif de coupe selon l'une des revendications 1 à 3, **caractérisé en ce que** le mandrin d'expansion (18) présente, sur au moins une partie de sa longueur, un contour extérieur de forme conique ou tronconique et présente une cavité (19) traversante centrale s'étendant en direction axiale.

5. Dispositif de coupe selon l'une des revendications 1 à 4, **caractérisé en ce que** la partie de préhension (2) présente un commutateur électrique (26) pour l'actionnement du moteur (4).

6. Dispositif de coupe selon l'une des revendications 1 à 5, **caractérisé en ce que** la partie de préhension (2) porte un accumulateur d'énergie, en particulier des batteries rechargeables (10).

7. Dispositif de coupe selon l'une des revendications 1 à 6, **caractérisé en ce que** le levier de serrage (13) et le mandrin d'expansion (18) sont reliés l'un à l'autre de manière articulée par l'intermédiaire de trous oblongs (15, 17) et de goujons (16).

8. Dispositif de coupe selon l'une des revendications 1 à 7, **caractérisé en ce que** le trou oblong (17) du mandrin d'expansion (18) est parallèle à l'axe du mandrin (18) et disposé à l'extérieur de la cavité axiale (19) du mandrin d'expansion (18).

9. Dispositif de coupe selon l'une des revendications 2 à 8, **caractérisé en ce que** les fentes sphériques (29) sont reliées entre elles au moyen d'un élément élastique (30) et/ou enveloppées par ou entremêlées d'une bande élastique dans la direction circonférentielle.

10. Dispositif de coupe selon l'une des revendications 1 à 9, **caractérisé en ce que** le dispositif de coupe est conçu sous forme de cisaille à gazon ou taille-haies ou tondeuse à cheveux.

11. Dispositif de coupe selon l'une des revendications 1 à 10, **caractérisé en ce qu'**est disposé entre la partie préhension (2) et la tête de coupe (3) un élément ressort (31) qui permet un pivotement élastique de la tête de coupe (3) par rapport à la partie de préhension (2).

12. Dispositif de coupe selon l'une des revendications 1 à 11, **caractérisé en ce que** l'élément ressort (31) est formé d'un ressort hélicoïdal ou spiral entourant la sphère (12) dans la direction circonférentielle.

13. Dispositif de coupe selon l'une des revendications 1 à 12, **caractérisé en ce que** l'élément ressort (31), en particulier le ressort hélicoïdal, est fixé, plus particulièrement maintenu, sur la partie de préhension (2) et sur la tête de coupe (3).

14. Dispositif de coupe selon l'une des revendications 1 à 13, **caractérisé en ce que** l'élément ressort (31) est fixé à rotation dans la direction circonférentielle de la sphère (12) sur la partie de préhension (2) et sur la tête de coupe (3).

15. Dispositif de coupe selon l'une des revendications 1 à 14, **caractérisé en ce que** la douille (11) est conçue en matériau élastique et la sphère (12) présente, sur sa surface, une pluralité de surfaces planes.
